Europäisches Patentamt

European Patent Office

Office européen des brevets

(19)

(11) Publication number: **0 044 224**
**A1**

(12)

# EUROPEAN PATENT APPLICATION

(21) Application number: **81303233.1**

(22) Date of filing: **14.07.81**

(51) Int. Cl.³: **A 01 N 25/24**
**A 01 N 33/12, A 01 N 61/00**

(30) Priority: **16.07.80 GB 8023138**

(43) Date of publication of application:
**20.01.82 Bulletin 82/3**

(84) Designated Contracting States:
**AT BE CH DE FR IT LI LU NL**

(71) Applicant: **Sampson, Michael James**
**21 The Avenue**
**Chichester Sussex(GB)**

(72) Inventor: **Sampson, Michael James**
**21 The Avenue**
**Chichester Sussex(GB)**

(74) Representative: **Crampton, Keith John Allen et al,**
**D. Young & Co. 10 Staple Inn**
**London WC1V 7RD(GB)**

(54) **Disease control in plants.**

(57) Fungi on growing plants are killed or their growth is inhibited by applying to the plants a growth regulator such as chlorocholine chloride, together with a metabolic additive, e.g. a carbohydrate or vitamine, and/or a coating agent, e.g. di-1-*p*-menthene.

EP 0 044 224 A1

Croydon Printing Company Ltd.

1

## DISEASE CONTROL IN PLANTS

My prior Patent Application PCT/GB 79/00050, published as WO 79/00838, describes inter alia the increase in the efficacy of agricultural growth regulators used in combination with certain metabolic additives, viz.

(a) a carbohydrate source, e.g. glucose, hydrolysed starch, sucrose, fructose, glycerol, glyceraldehyde, erythrose, ribulose, xylulose or arabinose or an ester or glycoside or metabolic equivalent of such a carbohydrate, which will normally be applied at 10 to 10,000 g/ha (grams per hectare);

(b) an organic acid of the Krebs Tricarboxylic Acid Cycle or a metabolic precursor thereof, (including citric, succinic, malic, pyruvic, acetic and fumaric acids), which will normally be applied at similar rates to the carbohydrate source;

(c) a vitamin or coenzyme, e.g. ascorbic acid, thiamine, riboflavin, pyridoxine, pyridoxamine, pyridoxal, nicotinamide, folic acid, or a precursor thereof including nicotinic acid, which will normally be applied at 0.01 to 500 g/ha;

(d) a purine or pyrimidine nucleoside, nucleotide or a metabolic precursor thereof, e.g. adenine, adenosine, thymine, thymidine, cytosine, guanine, guanosine, hypoxanthine, uracil, uridine or inosine, which will normally be applied at 1 to 500 g/ha;

(e) a fatty acid of a type found in natural saturated and unsaturated fats, e.g. butyric, lauric, palmitic, stearic, oleic and linoleic acid, which will normally be applied at 10 to 10,000 g/ha;

(f)    a naturally occurring fat or oil including olive, soya, coconut and corn oils, which can be degraded by living organisms to fatty acids and which will normally be applied at 10 to 10,000 g/ha;   and

(g)    an amino acid of a type that occurs naturally in plant proteins, e.g. glycine, alanine, valine, leucine, isoleucine, serine, threonine, cysteine, methionine, aspartic acid, glutamic acid, glutamine, asparagine, lysine, hydroxylysine, arginine, histidine, phenylalanine, tyrosine, tryptophan, proline or hydroxy-proline, which will normally be applied at 1 to 500 g/ha.

My subsequent Patent Application PCT/GB 80/00116, published as WO 81/00187, further describes the use of such metabolic additives in combination with a coating agent, for example di-1-p-menthene or a related terpene.   Such coating agents include but are not limited to the following :

(1)    di-1-p-menthene (a terpene sold under the trade names of Miller Gard, Vapor Gard and Miller Aide);

(2)    acrylic polymers, including copolymers, e.g. polyacrylic acid, polyacrylamide, polyacrylonitrile, poly(methyl methacrylate) and poly(ethyl acrylate/butyl acrylate);

(3)    cellulose ethers, e.g. hydroxethyl cellulose and sodium carboxymethyl cellulose;

(4)    cellulose esters, e.g. methyl cellulose;

(5)    epoxy resins, e.g. Epikote 828 and Epikote 1001;

(6)    hydrocarbon resins, e.g. petroleum resins;

(7)    polyester and polyether resins;

(8)    polyamide resins;

(9)    rubbers, e.g. natural rubber, polyurethane, butyl rubber, nitrile rubber, polychloroprene, and rubber/oil Emuline;

(10)   silicone resins and polymers;

(11)   styrene polymers, including copolymers, e.g. polystyrene and styrene/butadiene;

(12)   thermosetting polymers, e.g. melamine-formaldehyde copolymer, phenol-formaldehyde resins and ureaformaldehyde resins;

(13)   vinyl polymers, including copolymers, e.g. polyvinyl acetate, polyvinyl alcohol, polyvinyl butyral, polyvinyl pyrrolidone, poly (vinyl acetate/vinyl chloride) and poly (vinyl acetate/acrylate);   and

(14)   natural drying oils, e.g. linseed and linseed/tung oils.

The coating agents themselves are applied in water at from 250 ml to 62 litres per hectare of coating agent.   The amount of water per hectare in which this quantity of coating agent is used varies depending on the method of application.   In aerial or controlled-droplet application, the amount of water is in the range 20 to 120 litres per hectare (about 2 to 10 Imperial gallons per acre); in using conventional ground-spray equipment, the amount of water is in the range 110 to 5600 litres per hectare (about 10 to 500 Imperial gallons per acre).

In using the coating agents as disclosed in WO 81/00187, it is possible to apply a fungicide or growth regulator in the autumn in order to affect fungal and plant development both then and in the ensuing spring, thus, by a single application, effectively treating the plant at two discrete growth periods with an intervening period during which no significant growth of plant fungus takes place.

It has now been discovered that the treatment of crop plants with a growth regulator such as chlorocholine chloride in combination with the metabolic additives described in WO 79/00838 has a surprising and unexpected effect upon fungal development on the crop plant.   In accordance with the present invention there is provided a method of killing or inhibiting fungi on growing plants, comprising applying to the plants a growth regulator, together with a coating agent and/or a metabolic additive of the types defined above.   Although neither chlorocholine chloride nor the metabolic additive used is significantly fungicidally active at the rate of application involved, a decrease in the development of fungal pathogens results and lasts for many weeks after treatment.

When a coating agent, particularly di-1-$\underline{p}$-menthene or a related terpene, is used in combination with the growth regulator there is a further decrease in the development of fungal pathogens. The coating agent at the rate applied is not itself significantly fungicidal, nor is it acting as a physical barrier to fungal development, since the control of fungal pathogens extends to a time when the plant has grown at least five times the size that it was at application and has formed many new (yet still protected) leaves. Thus there is a synergistic action between the coating agent and the growth regulator formulation.

While it is not possible at present to be certain as to how the effect is produced it seems likely that it results from action on the plant's hormonal system leading to greater resistance to fungal infection.

This technique is applicable to a wide range of crop and ornamental plants including, but not limited to, small-grain cereals, e.g. wheat, rice and barley; large-grain cereals, e.g. maize; potatoes; sugar beet; sugar cane and fruit-bearing trees and bushes.

Among other coating agents are those listed in my prior copending application No. 8024888, viz.:

1. Terpene hydrocarbons of the elementary composition $C_{10}H_{16}$ corresponding to 2 isoprene units (monoterpenes).

2. Terpene hydrocarbons of the elementary composition $C_{15}H_{24}$ (sesquiterpenes).

3. Terpene hydrocarbons of the elementary composition $C_{20}H_{32}$ and $C_{30}H_{48}$ (di and tri-terpenes).

4. Terpenes having 40 carbon atoms (tetraterpenes).

5. Bi and tricyclic monoterpenes and their derivatives (e.g. oxygenated derivatives) such as $\alpha$ and $\beta$ pinene, d-camphor, d-borneol, d-tanacetone, $\beta$ thujone, d-$\Delta^3$ carene.

6. Terpene resins (compounded with or without natural or synthetic rubbers).

7. Gum turpentine.

8. Sulphate turpentine.

9. Wood turpentine.

10. Pineoils.

11. Terpineols.

12. Alkyd Resins, Non-oxidizing - e.g. Castor oil types Coconut oil types Hydrogenated* oil types        *castor Lauric acid types Oil-free types Saturated acid types Synthetic fatty acid types.

13. Alkyd Resins, Oxidizing - e.g. Acrylic resin modified Dehydrated castor oil types Epoxide resin modified Isophthalic acid - based types Linoleic-rich oil type Linseed oil types Linseed oil/dehydrated castor oil types Linseed oil/Soya bean oil types Linseed oil/Tung oil types Maleic Resin modified Marine oil types Phenolic Resin modified Rosin modified Safflowerseed oil types Silicone Resin modified Soya bean oil types Soya bean oil/Tung oil types Styrenated types Sunflowerseed oil types Tall oil types Tobaccoseed oil types Unmodified types Vinyl Toluene modified Water soluble types.

14. Benzoguanamine resins.

15. Butadiene/Styrene copolymer resins.

16. Carbamide resins.

17. Copal ester resins.
18. Coumarone indene resins.
19. Cresylic resins.
20. Epoxide ester resins -
    e.g. Dehydrated caster oil types
         Linseed oil types
         Linseed oil/rosin types
         Phenolic resin modified
         Soya bean oil types
         Styrenated types
         Vinyl toluene modified
         Unmodified types.
21. Epoxide melamine condensates.
22. Epoxide phenolic condensates.
23. Ester gums.
24. Fumaric resins.
25. Furan resins.
26. Ketone resins.
27. Maleic resins.
28. Melamine resins -
    e.g. Butylated types
         Hexamethoxy - methyl types
         Formaldehyde condensates.
29. Metallic rosinates -
    e.g. Calcium or zinc resinates
         Zinc/calcium mixtures both rosin or
             modified rosin.
30. Phenolic resins and modified phenolic resins -
    e.g. phenol/aldehyde resole condensates adducted
             to rosin or modified rosin.
31. Phenoxy resins.
32. Polybutadiene resins.
33. Polybutene resins.
34. Polycarbonate resins.
35. Polyisobutylene resins.
36. Polyacrylate ester resins -
    e.g. polymethacrylate ester resins.

37. Polysulphide resins.

38. Polyurethane resins - e.g. modified types oil-modified types.

39. Polyvinyl acetal resins.

40. Polyvinyl ether resins.

41. Polyvinyl formal resins.

42. Rosin derivatives - e.g. esters of rosin, copal, rosin acids or rosin modified by hydrogenation, polymerisation, isomerisation or disproportionation with glycerol, pentaerythiritol or other polyhydric alcohols.

43. Maleic/fumaric condensate resins - e.g. Maleic or fumaric acid/anhydride adducts or

rosin or modified rosins, their esters with glycerol, pentaerythritol or other polyhydric alcohols.

44. Cyclised rubber resins.

45. Styrene/maleic anhydride resins.

46. Urea resins.

47. Xylene formaldehyde resins.

48. Natural gums/resins - e.g. Accoroides Arabic Benzoin Copals Damar Elemi Gamboge Karaya Mastic Rosin

Sandarac

Shellac

Tragacanth.

8

CLAIMS

1.      A method of killing or inhibiting fungi on growing plants, comprising applying to the plants a growth regulator, together with a coating agent and/or a metabolic additive of the types defined in the specification.

2.      A method as claimed in Claim 1, in which the metabolic additive is a carbohydrate or vitamin.

3.      A method as claimed in Claim 2, in which the coating agent is one of those listed hereinbefore, including those in Application No. 8024888.

4.      A method as claimed in Claim 3, in which the coating agent is di-1-p-menthene.

5.      A method as claimed in any preceding claim, in which the plant growth regulator is chlorocholine chloride.

European Patent Office

EUROPEAN SEARCH REPORT

## DOCUMENTS CONSIDERED TO BE RELEVANT

| Category | Citation of document with indication, where appropriate, of relevant passages | Relevant to claim |
|---|---|---|
| X | GB - A - 955 685 (J.F. TWOMEY)<br>* Claims; page 7, lines 18-21; page 8, lines 1-3; page 8, lines 1-3,58; page 9, lines 23-25, 66-69; page 10, lines 1-12 *<br>-- | 1 |
|  | BE - A - 532 117 (E.P. KEOGH P.L.)<br>* Claims 1-3 5 *<br>-- | 1,3,5 |
|  | US - A - 3 592 910 (A.R. CLARK et al.)<br>* Column 10, line 31 to column 11, line 31 *<br>-- | 1,4 |
| D | WO - A - 79/00838 (M.J. SAMPSON)<br>* Claims *<br>-- | 1,2,5 |
| P | EP - A - 0 022 666 (M.J. SAMPSON)<br>* Claims * | 1,3-5 |
| D | & WO - A - 81/00187<br>-- |  |
|  | CHEMICAL ABSTRACTS, vol. 77, no.3, July 17,1972, page 176, abstract 15539w Columbus, Ohio, US Z.A. BOCHKAREVA et al. "Chlorocholine chloride and the resistance of wheat to pests and diseases"<br>& ZASHCH. RAST (Moscow), 1971, 16(12), 20-1<br>* Abstract *<br>-- ./. | 1,5 |

CLASSIFICATION OF THE APPLICATION (Int Cl )

A 01 N 25/24
33/12
61/00

TECHNICAL FIELDS SEARCHED (Int. Cl.³)

A 01 N 25/24
33/12
61/00

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family.

corresponding document

The present search report has been drawn up for all claims

| Place of search | Date of completion of the search | Examiner |
|---|---|---|
| The Hague | 20-10-1981 | DECORTE |

EPO Form 1503 1 06.78

European Patent
Office

**EUROPEAN SEARCH REPORT**

Application number

EP 81 30 3233.
-2-

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | |
| | CHEMICAL ABSTRACTS, vol. 89, no. 23, December 4, 1978, page 180, abstract 192328v Columbus, Ohio, US E. KUSMA "Effect of growth regulators on the resistance of Hesperis matronalis to Erysiphe cruciferarum" & OKHR. SREDY RATSION. ISPOL'Z. RASTIT. RESUR. 1976, 279-81. * Whole abstract* ------ | 1,5 | |
| | | | TECHNICAL FIELDS SEARCHED (Int. Cl.³) |

EPO Form 1503.2  06.78